# EUROPÄISCHE PATENTSCHRIFT

(11) **EP 0 777 351 B1**
(45) Veröffentlichungstag und Bekanntmachung des Hinweises auf die Patenterteilung: **05.04.2006**
(21) Anmeldenummer: 96402629.8
(22) Anmeldetag: 04.12.1996
(51) Int. Cl.: H04J 3/06

(54) **Synchrones digitales Übertragungssystem**
Synchronous digital transmission system
Système de transmission numérique synchrone

(30) Priorität: 07.12.1995 DE 19545675
(43) Veröffentlichungstag der Anmeldung: 04.06.1997
(73) Patentinhaber: ALCATEL, 75008 Paris (FR)
(72) Erfinder: Wolf, Michael, Dr., 74395 Mundelsheim (DE); Kasper, Jürgen, 70199 Stuttgart (DE); Dive, Geoffrey, 71546 Aspach (DE)
(74) Vertreter: Knecht, Ulrich Karl

(56) Entgegenhaltungen:
- WO-A-94/27386
- SHOLANDER P E ET AL: "METHODOLOGY AND RESULTS OF SYNCHRONOUS DIGITAL HIERARCHY NETWORK PAYLOAD JITTER SIMULATION" SIMULATION, Bd. 64, Nr. 1, 1. Januar 1995, Seiten 34-40, XP000570056
- OWEN H L ET AL: "SYNCHRONOUS DIGITAL HIERARCHY NETWORK POINTER SIMULATION" COMPUTER NETWORKS AND ISDN SYSTEMS, Bd. 26, Nr. 5, 1. Januar 1994, Seiten 481-491, XP000417463

## Beschreibung

Die Erfindung betrifft ein Übertragungssystem für zu einem Multiplexsignal zusammengefaßte Digitalsignale gemäß dem Oberbegriff des Anspruchs 1 und ein Netzelement gemäß dem Oberbegriff des Anpruchs 2.

Ein Übertragungssystem für zu einem Multiplexsignal zusammengefaßte Digitalsignale ist z. B. ein Übertragungssystem für die Synchrone Digitale Hierarchie oder ein Übertragungssystem für synchrone optische Netze gemäß dem SONET Standard, den das American National Standards Institute angenommen hat. In einem Übertragungssystem für die Synchrone Digitale Hierarchie (SDH) und in einem Übertragungssystem gemäß dem SONET Standard werden zu übertragende Signale nach einem bestimmten Muster zu einem Multiplexsignal zusammengefaßt und nach Rahmen strukturiert. Ein solcher Rahmen wird bei SDH als synchroner Transportmodul STM bezeichnet; er ist z. B. in den CCITT-Empfehlungen G.707, G.708 und G.709 beschrieben. Der Rahmen besteht aus 270 Spalten und 9 Zeilen. In jeder Spalte einer Zeile ist jeweils ein Byte enthalten: In den Zeilen 1 bis 3 und 5 bis 9 ist jeweils in den Spalten 1 bis 9 der sogenannte "Section Overhead" (SOH) für Steuerungs- und Fehlererkennungsinformationen vorgesehen. In der vierten Zeile von Spalte 1 bis 9 ist eine Zeigerverwaltungseinheit vorgesehen, die als "AU-Pointer" (AU-P) bezeichnet ist. In den restlichen Spalten und Zeilen ist die Nutzinformation, die "STM-1 Payload" untergebracht. Eine "STM-1 Payload" ist z. B. in einem virtuellen Container VC-4 untergebracht, der aus einem Bereich für Nutzdaten (payload) und einem Bereich für Steuerdaten (path overhead, POH) besteht.

Weitere in SDH festgelegte Einheiten sind z. B. Administrative Units, z. B. AU-4, die aus einem virtuellen Container VC und einem AU-Zeiger (AU-Pointer) zusammengesetzt sind, und Tributary Units, z. B. TU-12, die aus einem virtuellen Container und einem TU-Zeiger (TU-Pointer) zusammengesetzt sind.

STM-1 Signale werden über eine Übertragungsstrecke gesendet, die in bestimmten Abständen, z. B. an Netzelementen, Schaltungen aufweist, in denen ein ankommendes STM-1 Signal an einen lokalen (internen) standardisierten Takt des Netzelements angepasst wird. Diese Schaltungen führen eine Taktanpassung und einen Ausgleich von Phasenschwankungen durch ein bekanntes Bytestopfverfahren aus. Hierbei werden an fest vorgegebenen Stellen des Rahmens (Bytes H1, H2, H3) bei Bedarf Stopfbytes eingesetzt (CCITT-Empfehlung G.709). Bei einem positiven Stopfvorgang werden an der Stopfstelle die Nutzdaten ausgelassen und bei einem negativen Stopfvorgang werden in die Stopfstelle Nutzdaten eingefügt. Ein Stopfvorgang wird auch als Pointer-Aktion bezeichnet, da nach jedem Stopfvorgang der Wert des Pointers geändert werden muss: Der Pointer zeigt danach auf ein anderes Nutzdatenbyte .

Eine Untersuchung dieser Pointer-Aktionen anhand eines Modells eines SDH-Übertragungssystems ist bekannt aus: Henry L. Owen und Thomas M. Klett, "Synchronous digital hierarchy network pointer simulation", Coniputer Networks and ISDN Systems 26, 1994, Seiten 481 bis 491. Das in der dortigen Fig. 3 gezeigte Modell besteht aus einer Anzahl von Netzelementen 1, ..., N-1. Am Netzelement 1 werden Signale (Telefon, Video, Computer Data) dem Netzwerk zugeführt und in einem "mapper" (synchronizer) zu SDH-Signalen zusammengefügt. Jedem Netzelement N ist ein interner Takt zugeordnet. Ein Modell eines Netzelementes N ist in der dortigen Fig. 5 gezeigt. Einem elastischen Speicher (First-In, First-Out, FIFO) werden seriell Rahmen eines Eingangssignals zugeführt, das den Takt des vorhergehenden Netzelementes N-1 hat. Mit diesem Takt werden die Bytes in den Speicher geschrieben und mit dem Takt des Netzelementes N werden die Bytes aus dem Speicher gelesen. Ob ein Byte in den Speicher geschrieben wird, hängt davon ab, ob es ein Nutzdatenbyte (payload) oder ein "overhead"-Byte ist. Dies geschieht durch einen in Fig. 5 gezeigten "byte presenter", der durch den Takt des vorhergehenden Netzelementes N-1 gesteuert ist. Im Falle einer AU-4 werden alle Nutzdatenbytes in denselben Speicher geschrieben und in anderen Fällen gibt es verschiedene Speicher für verschiedene Arten von Nutzdaten. Die Anzahl der Bytes im Speicher bestimmt, wann der Speicher zu voll oder zu leer ist. Mit Hilfe eines definierten oberen und unteren Schwellenwertes werden Pointer-Aktionen ausgelöst, die von einer Stopfeinrichtung (Pointer Request Generator, Pointer Processor) gesteuert werden. Bei diesen Pointer-Aktionen kann es zu störenden Effekten kommen, die Phasenschwankungen am Empfangsort (desynchronizer) verursachen. Diese Effekte sind z. B. beschrieben in: Henry L. Owen und Peter E. Sholander, "Methodology and Results of Synchronous Digital Hierarchy Network Payload Jitter Simmulation", SIMULATION, January 1995, Seiten 1 bis 8. Diese Effekte treten auf, wenn sich ein Netzknoten noch Ausfall einer externen Synchronisierungsquelle in einem Wartezustand (Holdover) befindet und eine Stopfeinrichtung die Pointer-Aktionen abhängig vom Füllstand eines Speichers mit festen Schwellenwerten ableitet. Im Wartezustand kann es zu Taktunterschieden von bis zu +/- 4,6 ppm kommen.

Aus WO 94/27386 ist eine Stopfvorrichtung mit einem Pufferspeicher für Nutzdaten, einem Schreibadresszähler und einem Leseadresszähler bekannt. Zusätzlich enthält die Stopfvorrichtung je einen schreibseitigen und einen leseseitigen Steuerzähler, die in anderen Intervallen zählt und gestoppt werden als die jeweiligen Adresszähler und zum gleichmäßigeren Treffen von Stopfentscheidungen dienen.

Der Erfindung liegt die Aufgabe zugrunde, ein Übertragungssystem für zu einem Multiplexsignal zusammengefaßte Digitalsignale anzugeben, bei dem die genannten störenden Effekte nicht mehr auftreten. Ein die Aufgabe lösendes Übertragungssystem ist Gegenstand des Anspruchs 1. Der Erfindung liegt außerdem die Aufgabe zugrunde, ein Netzelement für ein solches Übertragungssystem anzugeben. Ein diese Aufgabe lösendes Netzelement ist Gegenstand des Anspruchs 2. Vorteilhafte Ausgestaltungen der Erfindung sind in den Unteransprüchen angegeben.

Ein Vorteil der Erfindung ist, daß die Netzelemente mit sehr geringem Aufwand an die Lösung angepasst werden können.

Der Grundgedanke der Erfindung ist, daß innerhalb eines Netzelements die Lesezyklen verändert werden, so daß das z. B. durch den SDH-Standard festgelegte Rahmentormat bewusst aufgelöst wird; es entstehen quasi nicht SDH konforme interne Rahmen. Dadurch kommt es erfindungsgemäß zu gleichmäßig verteilten Pointer-Aktionen, es wird sozusagen ein "Uniform Pointer Prozessor" geschaffen.

Die Erfindung wird im folgenden beispielhaft anhand von Zeichnungen erläutert. Es zeigen:
- Fig. 1: eine in einem Netzelement vorhandene Anpassungsschaltung, und
- Fig. 2: eine beispielhafte Struktur eines internen Rahmens, wie sie innerhalb eines Netzelements vorliegt.

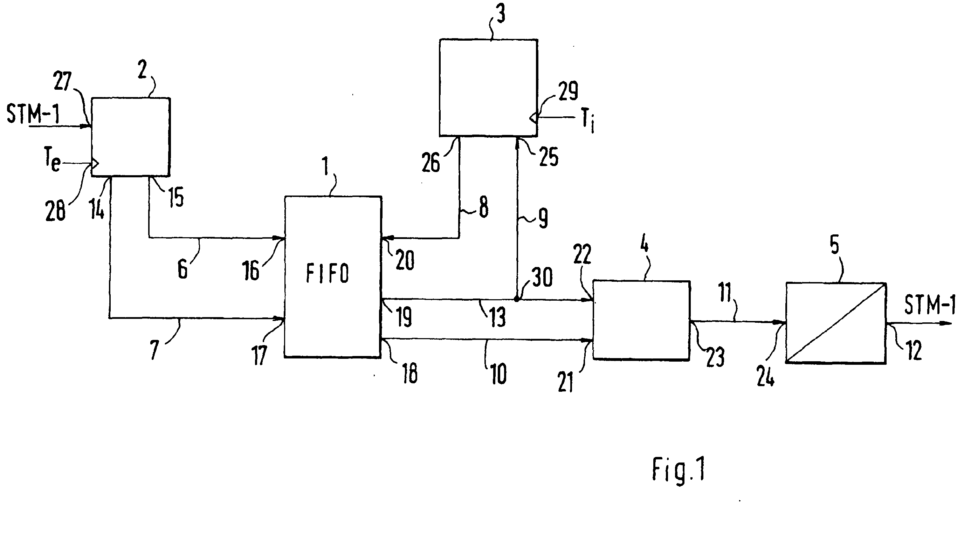

In Fig. 1 ist eine in einem Netzelement vorhandene Anpassungsschaltung mit für die Erfindung relevanten Bestandteilen schematisch gezeigt. Das Netzelement ist Teil eines Übertragungssystems, bei dem Digitalsignale zu zu einem Multiplexsignal zusammengefaßt sind. Die Erfindung wird im folgenden beispielhaft anhand eines Übertragungssystems für die Synchrone Digitale Hierarchie (SDH), im folgenden SDH-System genannt, beschrieben. Der Grundgedanke der Erfindung ist auch bei anderen Übertragungssystemen, z. B. einem Übertragungssystem gemäß dem SONET Standard, anzuwenden. In einem SDH-System sind in bekannter Weise mehrere Netzelemente durch unterschiedliche Übertragungsmedien miteinander verbunden. Aus diesem Grund erfolgt die Beschreibung der Erfindung im folgenden hauptsächlich in Bezug auf ein Netzelement; auf das SDH-System wird nur im Rahmen dessen eingegangen, wie es für das Verständnis der Erfindung erforderlich ist. Es werden die bei SDH-Systemen verwendeten Begriffe verwendet.

Die in Fig. 1 schematisch gezeigte Anpassungsschaltung hat einen Schreibadressengenerator 2, einen Pufferspeicher 1 in Fig. 1 als FIFO (First-In, First-Out) bezeichnet), einen Leseadressengenerator 3, einen Pointer-Generator 4 und eine Sortiereinrichtung 5, die wie folgt miteinander verbunden sind:

Der Schreibadressengenerator 2 hat zwei Anschlüsse 14, 15, die mit zwei Anschlüssen 16, 17 des Pufferspeichers 1 verbunden sind. Der Anschlub 15 Der Schreibadressengenerator 2 hat zwei Anschlüsse 14, 15, die mit zwei Anschlüssen 16, 17 des Pufferspeichers 1 verbunden sind. Der Anschluss 15 ist durch eine Verbindung 6 mit dem Anschluss 16 verbunden, und der Anschluss 14 ist durch eine Verbindung 7 mit dem Anschluss 17 verbunden.
Der Pufferspeicher 1 hat außerdem drei weitere Anschlüsse 18, 19, 20; der Anschluss 18 ist durch eine Verbindung 8 mit einem Anschluss 26 des Leseadressengenerators 3, der Anschluss 19 ist durch eine Verbindung 13 mit einem Anschluss 22 des Pointer-Generators 4 und der Anschluss 18 ist durch eine Verbindung 10 mit einem Anschluss 21 des Pointer-Generators 4 verbunden. An einer Stelle 30 der Verbindung 13 ist eine Verbindung 9 angeschlossen, die mit einem Anschluss 25 des Leseadressengenerators 3 verbunden ist.
Der Pointer-Generator 4 hat einen Ausgang 23, der durch eine Verbindung 11 mit einem Eingang 24 der Sortiereinrichtung 5 verbunden ist.

An dem Netzelement kommt z. B. ein STM-1 Signal an, das einem Eingang 27 des Schreibadressengenerators 2 zuführbar ist. Dieses STM-1 Signal kommt mit einem externen Takt Tₑ am Netzelement an, der von einem vorhergehenden Netzelement stammt. Aus dem ankommenden STM-1 Signal wird im Netzelement der externe Takt Tₑ abgeleitet und einem Takteingang 28 des Schreibadressengenerators 2 zugeführt.

Der Schreibadressengenerator 2 ist Teil einer in Fig. 1 nicht gezeigten Empfangseinrichtung, die in jedem Netzelement vorhanden ist, und die für eine Identifizierung der ankommenden Bytes und eine Taktrückgewinnung des externen Takts Tₑ aus dem ankommenden STM-1 Signals verantwortlich ist.

Durch den externen Takt Tₑ (line clock) des vorhergehenden Netzelements wird bestimmt, wann das nächste Nutzdatenbyte (payload byte) in den Pufferspeicher 1 geschrieben (gespeichert) wird. Die Empfangseinrichtung, in Verbindung mit dem Schreibadressengenerator 2, identifiziert die ankommenden Bytes und trennt die Nutzdatenbytes von den Steuerdatenbytes, im folgenden SOH-Bytes genannt, und gibt für jedes Nutzdatenbyte eine Schreibadresse an, unter der das jeweilige Nutzdatenbyte gespeichert wird.

Bedingt durch das Rahmenformat gibt es bei einem VC-4 folgenden Speicherzyklus: Es werden innerhalb eines Schreibzykluses 261 Nutzdatenbytes gespeichert, für die Dauer von 9 Bytes (SOH-Bytes) werden keine Bytes gespeichert. Daran anschließend werden wieder innerhalb des Schreibzykluses 261 Nutzdatenbytes gespeichert und für die Dauer von 9 SOH-Bytes werden keine Bytes gespeichert usw. Dieses Speichern der Nutzdatenbytes wird vom Schreibadressengenerator 2 gesteuert, wobei das Speichern mit dem externen Takt Tₑ erfolgt.

Durch den Leseadressengenerator 3 wird das Lesen aus dem Pufferspeicher 1 gesteuert, wobei das Lesen gemäß einem internen Takt Tᵢ erfolgt. Der Leseadressengenerator 3 hat einen Takteingang 29, dem der interne Takt Tᵢ zugeführt wird. Dieser interne Takt Tᵢ des Netzelements ist der (Soll)Takt, den ein aus dem Netzelement austretendes STM-1 Signal hat.

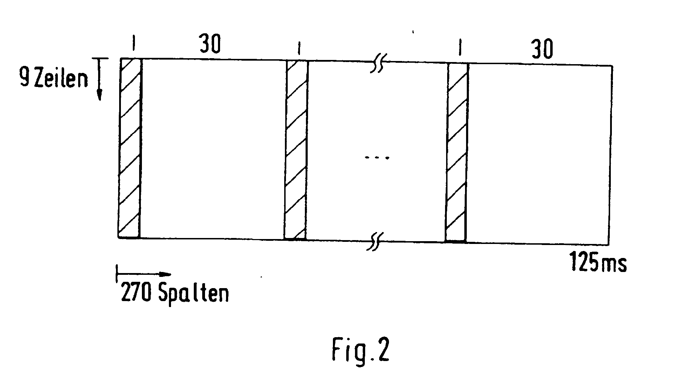

Der Leseadressengenerator 3 gibt einen Lesezyklus vor, gemäß dem Nutzdatenbytes aus von ihm angegebenen Speicheradressen des Pufferspeichers 1 gelesen werden. Erfindungsgemäß ist der Leseadressengenerator 3 so gesteuert, daß die Anzahl der innerhalb des Schreibzykluses gespeicherten Nutzdatenbytes größer als die Anzahl der innerhalb des Lesezykluses gelesenen Nutzdatenbytes ist. In den Schreibzklus wird nicht eingegritten, d. h. es werden unverändert regelmäßig 261 Nutzdatenbytes gespeichert, worauf sich die erwähnte Pause der Dauer von 9 SOH-Bytes anschließt. Der Lesezyklus ist jedoch verändert, d. h. der Leseadressengenerator 3 steuert den Pufferspeicher 1 so, daß z. B. 30 Nutzdatenbytes gelesen werden, dann folgt eine Pause von einem SOH-Byte, dann werden erneut 30 Nutzdatenbytes gelesen usw. Für einen VC-4 entsteht dadurch eine "1 Byte SOH/30 Bytes Nutzdaten" Abfolge. Die Nutzdatenbytes werden durch die Erfindung gleichmäßiger aus dem Pufferspeicher 1 gelesen. Nutzdatenbytes und SOH-Bytes werden abwechselnd zu einem 125 ms langen Rahmen zusammengesetzt, wodurch ein interner Rahmen entsteht, wie er beispielhaft in Fig. 2 gezeigt ist.

Durch die Anzahl von Nutzdatenbytes im Pufferspeicher 1 ist festgelegt, wann der Pufferspeicher 1 zu voll oder zu leer ist. Ist der Unterschied zwischen der Leseadresse und der Schreibadresse des Pufferspeichers 1 größer als der obere Schwellenwert (d. h. der Pufferspeicher 1 ist zu voll), wird eine negative Pointer-Aktion angefordert (Pointer Justification Request), wodurch zusätzliche Nutzdatenbytes gelesen werden und in den internen Rahmen gesetzt werden. Dem entsprechend wird eine positive Pointer-Aktion angefordert, wenn der Unterschied zwischen der Leseadresse und der Schreibadresse des Pufferspeichers 1 kleiner als der untere Schwellenwert ist (d. h. der Pufferspeicher 1 ist zu leer); es werden keine Nutzdatenbytes aus dem Pufferspeicher 1 gelesen. Pro Pointer-Aktion werden 3 Bytes "gestopft". Dieses Byte-Stopfverfahren ist bekannt. Bei einer Anpassungsschaltung gemäß der vorliegenden Erfindung ändert sich der Füllstand des Pufferspeichers 1 kontinuierlicher; dies hat zur Folge, daß Pointer-Aktionen regelmäßiger auftreten.

Der Pointergenerator 4 registriert, wenn eine Pointer-Aktion angefordert wurde und setzt diese Information in eine Änderung des Pointers um. Der Pointer im internen und damit auch im abgehenden Rahmen hat somit einen anderen Wert als der des im ankommenden STM-1 1 Signals enthaltenen Rahmens, d. h. er zeigt auf ein anderes Nutzdatenbyte.

Die Sortiereinrichtung 5 ordnet die gelesenen und im internen Rahmen vorhandenen Nutzdatenbytes so, daß ein von einem Netzelement ausgesendetes Multiplexsignal das festgelegte Rahmenformat hat. An einem Ausgang 12 der Sortiereinrichtung 5 tritt das auszusendende STM-1 Signal aus. Um die Ordnungsfunktion ausführen zu können, hat die Sortiereinrichtung 5 die Möglichkeit, eine Anzahl von Bytes zu speichern: Es können z. B. jeweils die Bytes einer Zeile des internen Rahmens gespeichert werden; die Sortiereinrichtung 5 kann aber auch so ausgelegt sein, daß sie nur die SOH-Bytes speichert und zu den für ein STM-1 Signal festgelegten Zeitpunkten zu den Nutzdatenbytes hinzufügt.

In Fig. 2 ist eine Struktur eines beispielhaften internen Rahmens gezeigt. Diese Darstellung des internen Rahmens lehnt sich an die Darstellung eines STM-N Rahmens an, wie sie üblicherweise in der Literatur verwendet wird. Der interne Rahmen hat ebenfalls 9 Zeilen und 270 Spalten und eine Rahmendauer von 125 ms. Der 270 Spalten aufweisende interne Rahmen ist in Fig. 2 zur Vereinfachung nur teilweise gezeigt, was durch Bruchstriche und Fortsetzungspunkte angedeutet ist.

In der ersten Spalte sind 9 SOH-Bytes (schraffiert) vorhanden (1 Spalte x 9 Zeilen) und in den folgenden 30 Spalten sind 270 Nutzdatenbytes (30 Spalten x 9 Zeilen) vorhanden. Daran anschließend ist wieder eine Spalte SOH-Bytes vorhanden usw., bis 270 Spalten ausgefüllt sind.

Der Leseadressengenerator 3 kann den Pufferspeicher 1 auch so steuern, daß in einem Lesezyklus 15 Nutzdatenbytes gelesen werden, worauf eine Pause der Dauer eines halben SOH-Bytes (4 SOH-Bits) folgt usw. Eine weitere Möglichkeit ist, daß in einem Lesezyklus 7,5 Nutzdatenbytes gelesen werden, worauf eine Pause der Dauer eines viertel SOH-Bytes (2 Bits) folgt, usw. Außerdem ist es möglich, daß in einem Lesezyklus 3,75 Nutzdatenbytes gelesen werden, worauf eine Pause der Dauer eines achtel SOH-Bytes; (1 Bit) folgt, usw.

Entsprechend den im vorhergehende beschriebenen Möglichkeiten eines internen Rahmens für einen VC-4, läßt sich ein interner Rahmen für einen TU-12 bilden, wobei folgende Möglichkeiten bestehen: Ein Lesezyklus von 18 Nutzdatenbytes gefolgt von einer Pause der Dauer eines halben SOH-Bytes. Ein Lesezyklus von 9 Nutzdatenbytes gefolgt von einer Pause der Dauer eines viertel SOH-Bytes. Ein Lesezyklus von 4,5 Nutzdatenbytes gefolgt von einer Pause der Dauer eines achtel SOH-Bytes.

## Patentansprüche

1. Übertragungssystem für zu einem Multiplexsignal zusammengefasste Digitalsignale, bei dem die Digitalsignale byteweise in Rahmen eines festgelegten externen Rahmenformats eingefügt sind, bei dem jeder Rahmen Bereiche für Steuerdaten und Bereiche für Nutzdaten hat, bei dem mehrere durch Übertragungsmedien miteinander verbundene Netzelemente vorhanden sind, in denen jeweils eine Anpassungsschaltung zum Ausgleich von Phasenschwankungen eines ankommenden Multiplexsignals vorhanden sind, und bei dem die Anpassungsschaltung einen Pufferspeicher (1) für Nutzdatenbytes, einen Schreibadressengenerator (2), der den Pufferspeicher (1) so steuert, dass innerhalb eines Schreibzyklus eine Anzahl von Nutzdatenbytes gespeichert wird, und einen Leseadressengenerator (3) hat, der den Pufferspeicher (1) so steuert, dass innerhalb eines Lesezyklus eine Anzahl von Nutzdatenbytes gelesen wird,
**dadurch gekennzeichnet,**
- **dass** der Leseadressengenerator (3) mit einem Lesezyklus arbeitet, der kürzer als der Schreibzyklus ist, so dass die Anzahl der innerhalb des Lesezyklus gelesenen Nutzdatenbytes kleiner als die Anzahl der innerhalb eines Schreibzyklus gespeicherten Nutzdatenbytes ist, wodurch ein internes Rahmenformat festgelegt ist, bei dem die Nutzdaten gleichmäßiger über den internen Rahmen verteilt sind als bei dem externen Rahmenformat; und
- **dass** jedes Netzelement eine Sortiereinrichtung (5) hat, die die gelesenen Nutzdatenbytes wieder so ordnet, dass ein von einem Netzelement ausgesendetes Multiplexsignal das externe Rahmenformat hat.

2. Netzelement für ein Übertragungssystem für zu einem Multiplexsignal zusammengefasste Digitalsignale, die byteweise in Rahmen eines festgelegten externen Rahmenformats eingefügt sind, und jeder Rahmen Bereiche für Steuerdaten und Bereiche für Nutzdaten hat, mit einer Anpassungsschaltung zum Ausgleich von Phasenschwankungen eines dem Netzelement zuführbaren Multiplexsignals, die einen Pufferspeicher (1) für Nutzdatenbytes, einen Schreibadressengenerator (2), der den Pufferspeicher (1) so steuert, dass innerhalb eines Schreibzyklus eine Anzahl von Nutzdatenbytes gespeichert wird, und einen Leseadressengenerator (3) hat, der den Pufferspeicher (1) so steuert, dass innerhalb eines Lesezyklus eine Anzahl von Nutzdatenbytes gelesen wird,
**dadurch gekennzeichnet, dass**
- der Leseadressengenerator (3) mit einem Lesezyklus arbeitet, der kürzer als der Schreibzyklus ist, so dass die Anzahl der innerhalb des Lesezyklus gelesenen Nutzdatenbytes kleiner als die Anzahl der innerhalb eines Schreibzyklus gespeicherten Nutzdatenbytes ist, wodurch ein internes Rahmenformat festgelegt ist, bei dem die Nutzdaten gleichmäßiger über den internen Rahmen verteilt sind als bei dem externen Rahmenformat; und
- das Netzelement eine Sortiereinrichtung (5) hat, die die gelesenen Nutzdatenbytes wieder so ordnet, dass ein von dem Netzelement ausgesendetes Multiplexsignal das externe Rahmenformat hat.

3. Übertragungssystem nach Anspruch 1 oder Netzelement nach Anspruch 2, **dadurch gekennzeichnet, daß** das Multiplexsignal ein STM-1 Signal gemäß dem SDH Standard ist, und daß für einen VC-4 die Anzahl der innerhalb des Lesezykluses gelesenen Nutzdatenbytes 30, 15, 7,5 oder 3,75 beträgt.

4. Übertragungssystem nach Anspruch 1 oder Netzelement nach Anspruch 2, **dadurch gekennzeichnet, daß** das Multiplexsignal ein STM-1 Signal gemäß dem SDH Standard ist, und daß für einen TU-12 die Anzahl der innerhalb des Lesezykluses gelesenen Nutzdatenbytes 18, 9 oder 4,5 beträgt.

5. Übertragungssystem nach Anspruch 1 oder Netzelement nach Anspruch 2, **dadurch gekennzeichnet, daß** die Sortiereinrichtung (5) mit einem in der Anpassungsschaltung vorhandenen Pointer-Generator (4) verbunden ist, der mit dem Leseadressengenerator (3) und dem Pufferspeicher (1) verbunden ist, und der der Sortiereinrichtung (5) die zu ordnenden Nutzdatenbytes und Bytes der Steuerdaten zuführt.

6. Übertragungssystem nach Anspruch 5 oder Netzelement nach Anspruch 5, **dadurch gekennzeichnet, daß** die Sortiereinrichtung (5) eine Anzahl von Steuerdatenbytes und innerhalb mehrerer Lesezyklen gelesener Nutzdatenbytes zwischenspeichert und dann ordnet, oder daß die Sortiereinrichtung (5) nur die Steuerdatenbytes speichert und diese zu festgelegten Zeitpunkten zu den gelesenen Nutzdatenbytes hinzufügt.

## Revendications

1. Système de transmission pour des signaux numériques groupés en un signal de multiplexage, dans lequel les signaux numériques sont insérés par octet dans les trames d'un format de trame externe déterminé, dans lequel chaque trame a des zones pour des données de commande, dans lequel se trouvent plusieurs éléments de réseau reliés entre eux par des moyens de transmission, dans lesquels se trouvent respectivement un circuit d'adaptation pour compenser les variations de phase d'un signal de multiplexage arrivant, et dans lequel le circuit d'adaptation a une mémoire tampon (1) pour des octets de données utiles, un générateur d'adresses d'écriture (2) qui commande la mémoire tampon (1) de sorte qu'un nombre d'octets de données utiles est mis en mémoire dans un cycle d'écriture, et un générateur d'adresses de lecture (3) qui commande la mémoire tampon (1) de sorte qu'un nombre d'octets de données utiles est lu dans un cycle de lecture,
**caractérisé en ce que**,
- le générateur d'adresses de lecture (3) travaille avec un cycle de lecture qui est plus court que le cycle d'écriture, de sorte que le nombre d'octets de données utiles lus dans le cycle de lecture est plus petit que le nombre d'octets de données utiles mis en mémoire dans un cycle d'écriture, grâce à quoi un format de trame interne est fixé, dans lequel les données utiles sont réparties plus régulièrement sur la trame interne que dans le format de trame externe, et
- chaque élément de réseau a un dispositif de tri (5) qui ordonne de nouveau les octets de données utiles de sorte qu'un signal de multiplexage émis par un élément de réseau a le format de trame externe.

2. Élément de réseau pour un système de transmission pour des signaux numériques groupés en un signal de multiplexage qui sont insérés par octet dans les trames d'un format de trame externe déterminé, et chaque trame a des zones pour des données de commande et des zones pour des données utiles, avec un circuit d'adaptation pour compenser les variations de phase d'un signal de multiplexage pouvant être conduit à l'élément de réseau, qui commande une mémoire tampon (1) pour des octets de données utiles, un générateur d'adresses d'écriture (2) qui commande la mémoire tampon (1) de sorte qu'un nombre d'octets de données utiles est mis en mémoire dans un cycle d'écriture, et a un générateur d'adresses de lecture (3) qui commande la mémoire tampon (1) de sorte qu'un nombre d'octets de données utiles est lu dans un cycle de lecture,
**caractérisé en ce que**,
- le générateur d'adresses de lecture (3) travaille avec un cycle de lecture qui est plus court que le cycle d'écriture, de sorte que le nombre d'octets de données utiles lus dans le cycle de lecture est plus petit que le nombre d'octets de données utiles mis en mémoire dans un cycle d'écriture, grâce à quoi un format de trame interne est fixé, dans lequel les données utiles sont réparties plus régulièrement sur la trame interne que dans le format de trame externe, et
- l'élément de réseau a un dispositif de tri (5) qui ordonne de nouveau les octets de données utiles de sorte qu'un signal de multiplexage émis par un élément de réseau a le format de trame externe.

3. Système de transmission selon la revendication 1 ou élément de réseau selon la revendication 2, **caractérisé en ce que** le signal de multiplexage est un signal STM-1 selon la norme SDH, et **en ce que** pour un VC-4 le nombre d'octets de données utiles lus dans le cycle de lecture s'élève à 30, 15, 7, 5 ou 3,75.

4. Système de transmission selon la revendication 1 ou élément de réseau selon la revendication 2, **caractérisé en ce que** le signal de multiplexage est un signal STM-1 selon la norme SDH, et **en ce que** pour une TU-12 le nombre d'octets de données utiles lus dans le cycle de lecture s'élève à 18,9 ou à 4,5.

5. Système de transmission selon la revendication 1 ou élément de réseau selon la revendication 2, **caractérisé en ce que** le dispositif de tri (5) est relié à un générateur de pointeur (4) se trouvant dans le circuit d'adaptation (4) qui est relié au générateur d'adresses de lecture (3) et à la mémoire tampon (1), et qui conduit au dispositif de tri (5) les octets de données utiles et les octets des données de commande destinés à être ordonnés.

6. Système de transmission selon la revendication 5 ou élément de réseau selon la revendication 5, **caractérisé en ce que** le dispositif de tri (5) met en mémoire et ordonne ensuite un nombre d'octets de données de commande et d'octets de données utiles lus dans plusieurs cycles de lecture, ou **en ce que** le dispositif de tri (5) ne met en mémoire que les octets de données de commande et ajoute ceux-ci aux octets de données utiles lus aux moments déterminés.

## Claims

1. Transmission system for digital signals combined into a multiplex signal, in which the digital signals are inserted in bytes into frames of an established external frame format, in which each frame has areas for control data and areas for user data, in which, connected to one another by transmission media, there are several network elements, in which in each case there is an adjustment circuit for equalising phase fluctuations of an incoming multiplex signal, and in which transmission system the adjustment circuit has a buffer memory (1) for payload bytes, a write address generator (2), which controls the buffer memory (1) in such a way that a number of payload bytes are stored within a write cycle, and a read address generator (3) which controls the buffer memory (1) in such a way that a number of payload bytes are read within a read cycle,
**characterised in that**
- the read address generator (3) operates with a read cycle which is shorter than the write cycle, so the number of payload bytes read within the read cycle is fewer than the number of payload bytes stored within a write cycle, whereby an internal frame format is established in which the payload is distributed more evenly over the internal frame than with the external frame format and
- each network element has a sorting device (5) which re-sorts the read payload bytes in such a way that a multiplex signal transmitted by a network element has the external frame format.

2. Network element for a transmission system for digital signals combined into a multiplex signal, which are inserted into bytes in frames of an established external frame format and each frame has areas for control data and areas for payload, with an adjustment circuit for equalising phase fluctuations of a multiplex signal which can be fed to the network element, the adjustment circuit having a buffer memory (1) for payload bytes, a write address generator (2), which controls the buffer memory (1) in such a way that a number of payload bytes are stored within a write cycle, and a read address generator (3), which controls the buffer memory (1) in such a way that a number of payload bytes are read within a read cycle,
**characterised in that**
- the read address generator (3) operates with a read cycle which is shorter than the write cycle, so the number of payload bytes read within the read cycle is fewer than the number of payload bytes stored within a write cycle, whereby an internal frame format is established in which the payload is distributed more evenly over the internal frame than with the external frame format and
- the network element has a sorting device (5) which re-sorts the read payload bytes in such a way that a multiplex signal transmitted by the network element has the external frame format.

3. Transmission system according to claim 1 or network element according to claim 2, **characterised in that** the multiplex signal is an STM-1 signal according to the SDH standard and **in that** for a VC-4 the number of payload bytes read within the read cycle amounts to 30, 15, 7.5 or 3.75.

4. Transmission system according to claim 1 or network element according to claim 2, **characterised in that** the multiplex signal is an STM-1 signal according to the SDH standard and **in that** for a TU-12 the number of payload bytes read within the read cycle amounts to 18, 9 or 4.5.

5. Transmission system according to claim 1 or network element according to claim 2, **characterised in that** the sorting device (5) is connected to a pointer generator (4) present in the adjustment circuit, which is connected to the read address generator (3) and the buffer memory (1) and which feeds the payload bytes and bytes of the control data to be sorted to the sorting device (5).

6. Transmission system according to claim 5 or network element according to claim 5, **characterised in that** the sorting device (5) intermediately stores and then sorts a number of control data bytes and payload bytes read within several read cycles or **in that** the sorting device (5) stores only the control data bytes and adds them to the read payload bytes at established times.
